# EUROPEAN PATENT APPLICATION

(11) **EP 0 875 415 A2**
(43) Date of publication of application: **04.11.1998**
(21) Application number: 97114287.2
(22) Date of filing: 19.08.1997
(51) Int. Cl.: B60N 2/00

(54) **A seat support**

(30) Priority: 28.04.1997 GB 9708620
(71) Applicant: NMI Safety Systems Ltd., London N17 0YX (GB)
(72) Inventor: Sawdy, Michael Barry, Nr. Ware, Herts (GB)
(74) Representative: Frankland, Nigel Howard

(57) **Abstract**

A seat support(1), comprising a carriage engageable with a rail. The carriage(2) is provided with means (3,4)adapted releasably to engage the rail to retain the carriage in position. The engagement means(3,4) being of elongate form and extending axially of the carriage(2) and is adapted to engage the rail within a predetermined region of the carriage(2). The carriage(2) is provided with support means adapted to support a seat(14,15) above the carriage. The support means includes load transfer means(5,6) adapted to transfer load from the seat to the carriage. The load transfer means engages the carriage in an elongate region(7) which is substantially contained within the said predetermined region where the rail engagement means (3,4) are provided.

## Description

**THE PRESENT INVENTION** relates to a seat support, and more particularly relates to a seat support for a seat which is to be mounted on a track.

Tracks are often provided in the floor of a motor vehicle, such as a coach or bus, or in the floor of an aircraft, and passenger seats may be mounted in position on the tracks.

Typically an individual seat or a row of two or more adjacent seats are secured, by means of legs, to a carriage which is then slidably mounted on parallel lengths of track secured to the floor of the vehicle. The precise position of the seat or row of seats may then be adjusted, and the carriage may then be secured relative to the tracks.

In this way a number of seats or rows of seats may be installed along the length of a vehicle such that the spaces between successive seats or rows of seats may be adjusted, thereby varying the "leg room" available for passengers.

Typically the track is of extruded aluminium, which is a relatively soft material. In typical prior proposed arrangements, the means provided on each carriage to engage the track have presented relatively small engaging surfaces. A consequence of this is that should an accident arise, during which a high force may be applied to the seat, an extremely high local force maybe applied to the track, causing deformation of the track. Indeed, it has been found that in prior proposed arrangements, when forces are applied to a seat which simulate a typical accident, either the track is damaged or the carriage is deformed.

The present invention seeks to provide an improved support for a seat which may be used with a track of the type described above which provides an improved performance.

According to this invention there is provided a seat support, said seat support comprising a carriage engageable with a rail, the carriage being provided with means adapted releasably to engage the rail to retain the carriage in position, the engagement means being of elongate form and extending axially of the carriage and being adapted to engage the rail within a predetermined region of the carriage, the carriage being provided with support means adapted to support a seat above the carriage, the support means including load transfer means adapted to transfer load from the seat to the carriage, the load transfer means engaging the carriage in an elongate region which is substantially contained within the said predetermined region where the rail engagement means are provided.

The support may be adapted to be engaged with a rail which presents two inwardly directed lips which together define a slot which provides access to a channel within the rail, the engagement means comprising two opposed elements, each having a vertically extending portion adapted to extend between the lips and an outwardly directed portion, the elements being movable to a position in which the outwardly directed portions of the elements engage the under-sides of the lips of the rail.

Preferably the said elements comprise a pair of blades, the blades having vertical portions extending through a slot formed in the body of the carriage and being resiliently biased towards one another, means being provided to force the blades apart against the bias.

Conveniently the means adapted to force the blades apart comprise a separator member, the separator member being mounted for pivotal movement between a position in which the separator member is retracted from the blades, to a position in which the separator member is located between the blades, thus biasing the blades apart.

Advantageously the separator member comprises two plates, the plates having between them a resilient element.

Preferably the separator member is provided with a recessed and chamfered portion adapted to make initial contact with the blades.

Conveniently the portion of the blades adapted to be contacted initially by the separator member are cut-away.

Preferably the separator member is mounted for pivotal movement.

Advantageously a hook member is provided adapted to engage the free end of the separator member to move the separator member from the position when it is located between the blades towards the retracted position.

Preferably the upper edge of each blade is provided with an outwardly directed portion, that outwardly directed portion being secured between a retaining strip and the top of an element comprising the carriage.

Conveniently the load transfer means comprise a pair of opposed load transfer plates, each being connected to the carriage at a respective side thereof, the load transfer plates being connected to support means which support the seat.

Preferably the said support means comprise a vertical leg extending from the support plates to a substantially horizontal support beam.

Advantageously inclined support fingers extend from the support plate to the support base.

Preferably an additional substantially vertical leg extends from the carriage to the support beam.

Preferably each support plate has a substantially linear lower edge, the lower edge of the support plate being secured to the carriage.

In order that the invention may be more readily understood, and so that further features thereof may be appreciated, the invention will now be described, by way of example, with reference to the accompanying drawings in which:
FIGURE 1 is a side view of a vehicle seat support in accordance with the invention,
FIGURE 2 is a perspective view of part of a track upon which the seat support may be mounted,
FIGURE 3 is a view corresponding to Figure 2 illustrating an alternative form of track,
FIGURE 4 is a view of the carriage of the support of Figure 1 in a first condition, with some parts of the support being shown,
FIGURE 5 is a partial sectional view of the carriage when in the first condition,
FIGURE 6 is an enlarged view of part of the carriage in the first condition, and
FIGURE 7 is a sectional view of part of the carriage illustrating the carriage in a second condition.

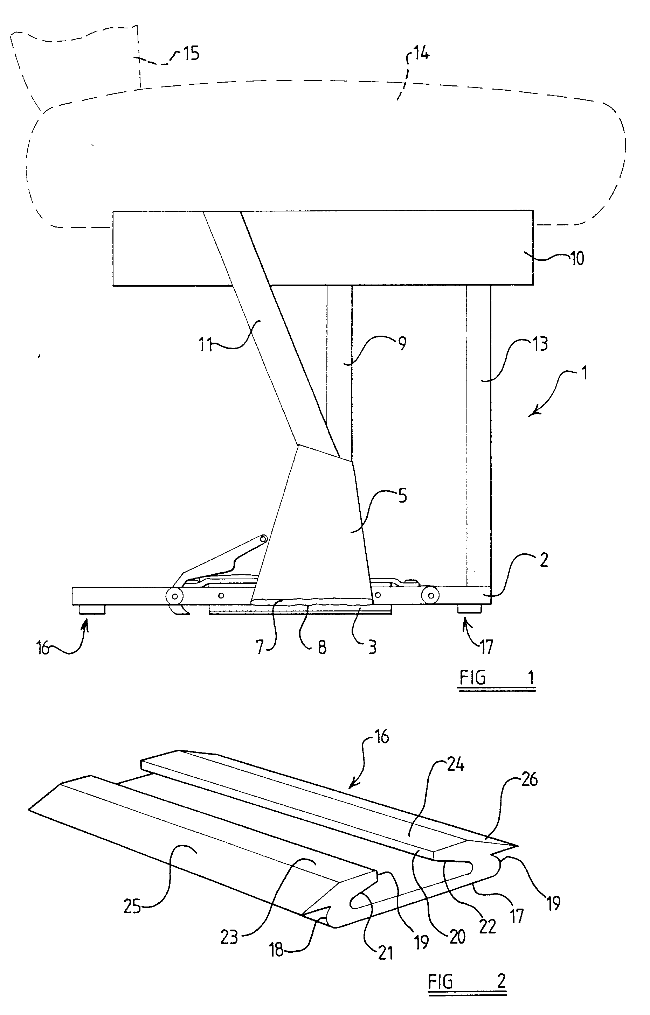

Referring initially to Figure 1 of the accompanying drawings, a support 1 for a vehicle seat comprises an elongate carriage 2 carrying a pair of elongate engagement blades 3,4 (only blade 3 is visible in Figure 1). The engagement blades 3,4 are located in the centre of the carriage 2 and have a substantial axial extent, extending over a central region of the carriage 2.

In the central region of the carriage 2, the carriage is provided, on opposed sides thereof, with load transfer plates 5,6 (only the plate 5 is visible in Figure 1). The load transfer plates 5,6 have horizontal lower edges 7 which are welded 8, or otherwise secured to the carriage 2. The whole of the lower edge 7 of the load transfer plate 5 is secured to the carriage within the region of the carriage 2 occupied by the engagement blades 3,4.

The two load transfer plates 5,6 support a vertically upstanding leg 9 which engages a horizontal seat support beam 10. The load transfer plates 5,6 also support a pair of inclined reinforcing aims 11,12 (only the reinforcing arm 11 is visible in Figure 1), the upper ends of which are welded to opposed vertical sides of the seat support beam 10. A further vertical leg 13 extends from the rear of the carriage 2 to the seat support beam 10.

A seat is mounted on the seat support beam 10, as illustrated in phantom in Figure 1, the seat comprising a squab 14 and a back 15.

The carriage 2, in addition to being provided with the engagement blades 3,4 is provided on its under-surface with protruding locating lugs 16,17. The blades 3,4 and the locating lugs 16,17 are adapted to engage with a track.

A typical track 16 is illustrated in Figure 2. The track 16 comprises a single elongate element of extruded aluminium formed as an upwardly open channel of substantially C-shape cross-section. The channel is defined by a base plate 17 and two upstanding elongate side walls 18,19, the upper ends of which terminate at two inwardly facing and opposed lips 19,20. Each side wall 18,19 defines an edge of the open channel. Each lip 19,20 has a respective under-surface 21,22 which, as will become clear from the following description, is engaged by a blade 3,4. Each lip 19,20 has a planar upper surface 23,24 which terminates with an outwardly directed tapering flange 25,26. The upper surface of the channel is thus unobtrusive when the channel is mounted in the floor of a vehicle, such as a coach, bus or aircraft.

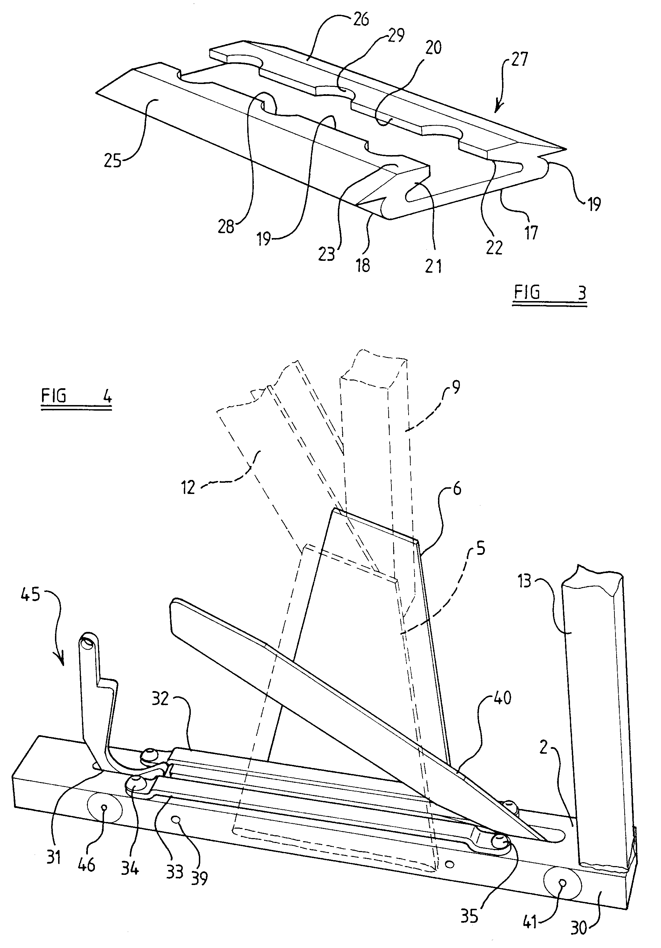

Figure 3 illustrates an alternative form of track 27. The substantial proportion of the features of the track 27 are the same as the corresponding features of the track 16, and are identified with the same reference numerals, and will consequently not be re-described. However, it is to be noted that the lips 19,20 of the track 27 are provided with regularly spaced opposed arcuate cut-outs 28,29. Such cut-outs are frequently found in channels of the type described and are adapted and dimensioned to receive cylindrical plungers which are present on some carriages that have been used previously to mount seats in position on the tracks.

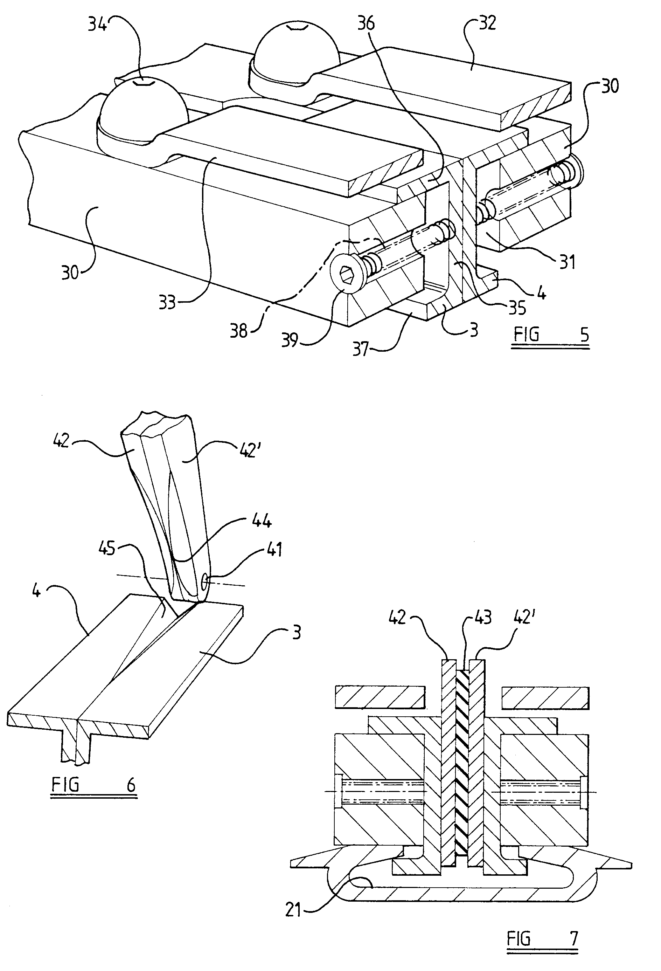

Figure 4 illustrates the carriage of Figure 1, together with some additional components of the seat support, and Figures 5 to 7 illustrate specific parts of the carriage.

Referring to Figures 4 and 5, the carriage 2 comprises an elongate rectangular element 30 formed of steel or other strong material. The under-side of the element 30 carries the locating lugs 16,17 which are visible in Figure 1. The locating lugs are centrally located and dimensioned to be received between the opposed lips 19,20 of a channel.

In a central region of the carriage 2, an elongate axially extending vertical slot 31 is provided. Adjacent the slot 31, on the upper surface of the element 30, two retaining strips 32,33 are provided, located on opposed sides of the slot 31. Each retaining strip comprises an elongate metal strip, the opposed ends of which are secured to the upper surface of the element 30 by means of screws 34,35. The central region of each retaining strip 33 is elevated above the surface of the element 30.

The blades 3,4 each comprise a vertical portion 35 which extends through the slot 31. At the upper end of the vertical portion 35 is a horizontally extending portion 36 which is received in the space between the retaining strip 33 and the upper surface of the element 30. The lower end of each blade carries an outwardly directed portion 37 which, will be described hereinafter, may engage the track.

The blades 3,4 are biassed inwardly into contact with each other by means of springs 38 received in appropriate bores 39 which extend horizontally from the exterior of the block 30 to the slot 31. As can be appreciated from Figure 5, the springs 38 bias the blades 3,4 inwardly until the vertical portions 35 engage each other.

A separator member 40 is provided, of elongate form, one end of which is pivotally connected to the block, about a pivotal axis 41 located adjacent one end of the slot 31. The separator member 40 comprises, as can be seen most clearly from Figure 7, two spaced apart plates 42,42' which contain between them a resilient element 43 made, for example, of rubber or the like.

As can be seen most clearly in Figure 6, adjacent the pivot point the outer faces of the lower edges of the plates 42,42' are recessed and chamfered 44. It is to be observed, from Figure 6, that parts of the blades 3,4, at the junction between the vertical portion and the horizontal portion are cut away 45 at the end of the blades adjacent the pivot connection 41 between the separator member 40 and the block 30.

At the other end of the slot 31 formed in the element 30, a hook element 45 is provided which is pivotally mounted in position about a pivot point 46.

When the carriage of the seat support is in an initial condition, as illustrated in Figures 4 and 5, the separator member 40 is elevated above the blades 3,4 and consequently the blades 3,4 are biassed together by means of the springs 38. The carriage may then be mounted on a track as shown in Figure 2 or Figure 3 with the locating lugs 16,17 and the lower edges of the blades 3,4 passing between the lips 19,20. The carriage may then be moved to the second condition, by pivoting the separator member 40 about the pivot point 41, moving the separator member 40 towards the blades 3,4. The cut-away and chamfered portion 44 of the plates 42,42' will engage the cut-away portions 45 formed on the blades 3,4, thus facilitating an initial separation of the blades 3,4 against the bias provided by the springs 38. The separator member 40 may be lowered to a position, as shown in Figure 1, in which the separator member 40 is substantially entirely accommodated between the plates 3,4. If necessary, the hook element 45 may be manipulated by rotation in a clockwise direction, to apply pressure to the top of the separator member to drive it fully home.

As can be seen in Figure 7, when the separator member is in this position, the blades 3,4 are moved outwardly and are separated by the separator member 40. The resilient element 43 may be compressed. This will help prevent any undesirable rattles developing. The lower horizontally extending outwardly directed portions 37 of the blades 3,4 are forced outwardly into the channel defined by the track and engage the under-surfaces 21,22 of the lips of the track, thus securing the carriage 2 to the track. The hook 45 is pivoted to a down position as shown in Figure 1.

It has been found that when the seat support has been secured to the track in this way, the outwardly directed portions of the blades 3,4 engage a substantial area of the track defined by the inwardly directed lips. Thus the carriage 2 is held firmly in position.

In the event of an accident arising, the squab and back of the seat tend to move forwardly. The force from the squab in the back of the seat is transferred to the seat support beam 10 and then, through the leg 9, the leg 13 and the reinforcing fingers 11, to the carriage 2. A substantial proportion of the force is applied to the carriage 2 through the force transfer plates 5,6. Thus the force is applied to the carriage in the very region of the carriage where the carriage is secured to the track by means of the blades 3,4. It has been found that, as a consequence of this feature, the seat support is able to withstand a very substantial force without being separated from the track, and without damaging the track.

If the carriage is to be removed from the track, the hook 45 is rotated counter clockwise towards the release position, as shown in Figure 4. The hook will engage the under-surface of part of the separator element 40 which projects beyond the ends of the blades 3,4 in the region of the hook, thus moving the separator element upwardly to commence disengagement of the separator member from the blades. Once the upward movement of the separator member has been commenced, the free end of the separator member can be grasped and the entire separator member can be pivoted upwardly to the position illustrated in Figure 4. The blades 3 and 4 will then be biassed towards each other by the springs 33, again occupying the position illustrated in Figure 5, which enable the entire seat support to be separated from the track.

The features disclosed in the foregoing description in the following Claims and/or in the accompanying drawings may, both separately and in any combination thereof, be material for realising the invention in diverse forms thereof.

## Claims

1. A seat support(1), said seat support comprising a carriage engageable with a rail, the carriage(2) being provided with means (3,4)adapted releasably to engage the rail to retain the carriage in position, the engagement means(3,4) being of elongate form and extending axially of the carriage(2) and being adapted to engage the rail within a predetermined region of the carriage(2), the carriage(2) being provided with support means adapted to support a seat(14,15) above the carriage, the support means including load transfer means(5,6) adapted to transfer load from the seat to the carriage, the load transfer means engaging the carriage in an elongate region(7) which is substantially contained within the said predetermined region where the rail engagement means (3,4) are provided.

2. A support according to Claim 1 adapted to be engaged with a rail which presents two inwardly directed lips(19,20) which together define a slot which provides access to a channel within the rail, the engagement means(3,4) comprising two opposed elements, each having a vertically extending portion(35) adapted to extend between the lips( 19,20) and an outwardly directed portion(37), the elements being movable to a position in which the outwardly directed portions(37) of the elements engage the under-sides of the lips (19,20) of the rail.

3. A support according to Claim 2 wherein the said elements comprise a pair of blades(3,4), the blades having vertical portions(35) extending through a slot formed in the body of the carriage and being resiliently biased towards one another, means(40) being provided to force the blades apart against the bias.

4. A support according to Claim 3 wherein the means adapted to force the blades(3,4) apart comprise a separator member(40), the separator member(40) being mounted for pivotal movement between a position in which the separator member is retracted from the blades(3,4), to a position in which the separator member(40) is located between the blades(3,4), thus biasing the blades apart.

5. A support according to Claim 4 wherein the separator member(40) comprises two plates(42,42 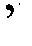 ), the plates(42,42 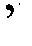 ) having between them a resilient element.

6. A support according to Claim 4 or 5 wherein a hook member(45) is provided adapted to engage the free end of the separator member(40) to move the separator member(40) from the position when it is located between the blades(3,4) towards the retracted position.

7. A support according to any one of the preceding Claims wherein the load transfer means comprise a pair of opposed load transfer plates(5,6), each being connected to the carriage(2) at a respective side thereof, the load transfer plates(5,6) being connected to support means which support the seat.

8. A support according to Claim 7 wherein the said support means comprise a vertical leg(9) extending from the support plates(5,6) to a substantially horizontal support beam(10).

9. A support according to Claim 8 wherein inclined support fingers extend from the support plate (5,6)to the support beam(10).

10. A support according to any one of Claims 11 to 13 wherein an additional substantially vertical leg(13) extends from the carriage(2) to the support beam(10).
